# EUROPÄISCHE PATENTSCHRIFT

(11) **EP 3 873 790 B1**
(45) Veröffentlichungstag und Bekanntmachung des Hinweises auf die Patenterteilung: **13.03.2024**
(21) Anmeldenummer: 19795552.9
(22) Anmeldetag: 29.10.2019
(51) Int. Cl.: B62D 5/04

(54) **KUGELUMLAUFLENKUNG**
RECIRCULATING-BALL STEERING SYSTEM
SYSTÈME DE DIRECTION À RECIRCULATION DE BILLES

(30) Priorität: 31.10.2018 DE 102018127204
(43) Veröffentlichungstag der Anmeldung: 08.09.2021
(73) Patentinhaber: KNORR-BREMSE Systeme für Nutzfahrzeuge GmbH, 80809 München (DE)
(72) Erfinder: KOGAN, Alexander, 51105 Köln (DE); MÜLLER, Jens-Hauke, 42553 Velbert-Neviges (DE)
(86) Internationale Anmeldenummer: PCT/EP2019/079490
(87) Internationale Veröffentlichungsnummer: WO 2020/089208

(56) Entgegenhaltungen:
- DE-A1-102012 204 376

## Beschreibung

Die vorliegende Erfindung betrifft eine Kugelumlauflenkung für ein Fahrzeug, insbesondere ein Nutzfahrzeug, zur Übertragung einer Lenkbewegung an einen Lenkstockhebel. Weiterhin betrifft die vorliegende Erfindung ein Fahrzeug, insbesondere ein Nutzfahrzeug umfassend die erfindungsgemäße Kugelumlauflenkung.

Kugelumlauflenkungen werden u.a. in leichten und schweren Nutzfahrzeugen eingesetzt und bilden Teile des Lenkgetriebes, das die Drehbewegung eines Lenkrads je nach Bauart entweder direkt oder indirekt über Gestänge auf Spurstangen überträgt. Eine Kugelumlauflenkung ist eine Art Spindellenkung, bei der die Kraft zwischen Spindel und Mutter von Kugeln übertragen wird, die in den Gewindegängen umlaufen.

Derartige Lenkgetriebe sind seit langem bekannt und in vielfachen Ausführungen erhältlich. So beschrieben beispielsweise die Dokumente DE 10 2014 106 488 A1 sowie DE 10 2014 106 493 A1 Kugelumlauflenkungen, bei denen die Lenkunterstützung durch den Einsatz von Hydraulik gewonnen wird.

Hydraulische Systeme weisen jedoch eine komplizierte Infrastruktur auf. So sind neben der aufwendigen hydraulischen Verrohrung weitere Komponenten wie Pumpen, Schläuche oder Dichtungen erforderlich.

Die DE 10 2012 204376 A1, von welcher die vorliegende Erfindung als nächstkommend ausgeht, offenbart ein Servolenkungssystem umfasst eine Eingangswelle, die betriebsmäßig mit einem Eingangselement verbunden ist, und ein Sektorgetriebe, das betriebsmäßig mit einem Lenkstockhebel verbunden ist. Auf der Eingangswelle ist eine erste Kugelumlaufspindel ausgebildet. Eine erste Kugelmutter umschreibt die erste Kugelumlaufspindel und steht damit über mehrere Kugellager in Drehmomentübertragungsverbindung damit. Eine erste Zahnstange ist starr an der ersten Kugelmutter angebracht und mit dem Sektorzahnrad zur Drehmomentübertragung damit in Eingriff. Eine zweite Kugelumlaufspindel ist nicht wesentlich koaxial zur ersten Kugelumlaufspindel. Eine zweite Kugelumlaufmutter umschreibt die zweite Kugelumlaufspindel und steht über die Kugellager in Drehmomentübertragungsverbindung mit der zweiten Kugelumlaufspindel. Eine zweite Zahnstange kämmt mit dem Sektorzahnrad zur Drehmomentübertragung. Ein Elektromotor ist dazu konfiguriert, dem Sektorzahnrad über die zweite Kugelumlaufspindel selektiv ein Drehmoment zuzuführen.

Aufgabe der vorliegenden Erfindung ist es daher, eine gegenüber dem Stand der Technik verbesserte Kugelumlauflenkung bereitzustellen, insbesondere eine Kugelumlauflenkung bereitzustellen, die eine deutlich vereinfachte Infrastruktur aufweist.

Bezogen auf eine Kugelumlauflenkung für ein Fahrzeug zur Übertragung einer Lenkbewegung an einen Lenkstockhebel wird die Aufgabe durch eine Kugelumlauflenkung mit den Merkmalen des unabhängigen Patentanspruchs 1 gelöst. Bezogen auf ein Fahrzeug wird die Aufgabe durch eine Kugelumlauflenkung mit den Merkmalen des nebengeordneten Patentanspruchs 3 gelöst. Vorteilhafte weitere Ausgestaltungen sind jeweils in den Unteransprüchen angegeben.

Die erfindungsgemäße Kugelumlauflenkung weist ein Gehäuse mit einem innerhalb des Gehäuses angeordneten Lenkkolben auf, wobei der Lenkkolben einen Kugelgewindetrieb umfasst und entlang seiner Längsachse verschiebbar ist, wobei der Lenkkolben eine Lenkschnecke umfasst. Weiterhin umfasst die erfindungsgemäße Kugelumlauflenkung einen elektrischen Aktuator zur Unterstützung der Bewegung des Lenkkolbens und ist dadurch gekennzeichnet, dass der elektrische Aktuator einen um die Lenkschnecke herum angeordneten Stator umfasst, der mit dem Gehäuse fest verbunden ist, sowie einen mit der Lenkschnecke fest verbundenen Rotor.

Die Erfinderin hat erkannt, dass durch die Kombination des mindestens eines Kugelgewindetriebs und des elektrischen Aktuators eine Kugelumlauflenkung realisierbar ist, die ohne hydraulische Komponenten auskommt. Die für Lenkbewegung erforderliche Hilfskraftunterstützung erfolgt rein elektrisch.

Da auf ein aufwendiges hydraulisches System somit verzichtet werden kann und ein einfacher Stecker ausreichend ist, um den elektrischen Aktuator mit elektrischer Energie zu versorgen, wird die Montage der erfindungsgemäßen Kugelumlauflenkung auf Kundenseite erheblich vereinfacht.

Weiterhin hat sich gezeigt, dass sich mit einer solchen Anordnung besonders kompakte Kugelumlauflenkungen darstellen lassen.

In einer nicht erfindungsgemäßen Kugelumlauflenkung umfasst der Lenkkolben einen zweiten Kugelgewindetrieb, der mit dem elektrischen Aktuator gekoppelt ist, insbesondere in dem eine Gewindemutter des Kugelgewindetriebs mit einem Rotor des elektrischen Aktuators kombiniert wird. Da ein Kugelgewindetrieb einen sehr hohen Wirkungsgrad aufweist, kann durch die Kombination der Gewindemutter mit dem Rotor ein leistungsschwächerer elektrischer Aktuator verwendet werden, der sich besonders vorteilhaft auf die Größe der Kugelumlauflenkung auswirkt.

In einer nicht erfindungsgemäßen Kugelumlauflenkung steht der elektrische Aktuator über ein Kraftübertragungsmittel mit dem Lenkkolben in Verbindung. Über ein Kraftübertragungsmittel wird eine räumliche Trennung zwischen dem elektrischen Aktuator und dem Lenkkolben ermöglicht, so dass die Kugelumlauflenkung spezifisch nach Kundenvorgaben hinsichtlich der Raumgeometrie anpassbar ist.

In einer weiteren nicht erfindungsgemäßen Kugelumlauflenkung umfasst der Lenkkolben einen zweiten Kugelgewindetrieb, der mit dem elektrischen Aktuator über ein Kraftübertragungsmittel gekoppelt ist.

Das Kraftübertragungsmittel ist vorzugsweise ausgewählt aus der Gruppe umfassend ein Zahnriemengetriebe, ein Kettengetriebe, ein Zahnradgetriebe, ein Kegelradgetriebe, ein Hypoidgetriebe, ein Kronenradgetriebe oder ein Schneckengetriebe.

In einer besonders bevorzugten Ausführungsvariante weist die Kugelumlauflenkung keine hydraulische Einheit auf, so dass die Unterstützung der Bewegung des Lenkkolbens ausschließlich elektrisch erfolgt.

Gemäß einem weiteren Aspekt betrifft die vorliegende Erfindung ein Fahrzeug, insbesondere ein Nutzfahrzeug aufweisend die erfindungsgemäße Kugelumlauflenkung.

Weitere Vorteile und Merkmale der erfindungsgemäßen Vorrichtung ergeben sich aus den Unteransprüchen, die sich auf vorteilhafte Ausgestaltungen der vorliegenden Erfindung beziehen und als solche nicht einschränkend zu verstehen sind.

Die nachstehend wiedergegebenen Ausführungsbeispiele sind dazu vorgesehen, dem Fachmann die Erfindung näher zu erläutern. Die Ausführungsbeispiele werden anhand der beigefügten Zeichnung erläutert. In dieser zeigen:
- Fig. 1:: eine erste Ausführungsvariante einer erfindungsgemäßen Kugelumlauflenkung im Querschnitt,
- Fig. 2:: eine zweite nicht erfindungsgemäße Kugelumlauflenkung im Querschnitt,
- Fig.3: eine dritte nicht erfindungsgemäße Kugelumlauflenkung im Querschnitt,
- Fig. 3a:: eine Darstellung der Kugelumlauflenkung aus Fig.3 gemäß Schnitt A-A,
- Fig. 4:: eine vierte nicht erfindungsgemäße Kugelumlauflenkung im Querschnitt,
- Fig. 4a:: eine Darstellung der Kugelumlauflenkung aus Fig.4 gemäß Schnitt A-A,
- Fig. 5:: eine fünfte nicht erfindungsgemäße Kugelumlauflenkung im Querschnitt,
- Fig. 6:: eine sechste nicht erfindungsgemäße Kugelumlauflenkung im Querschnitt,
- Fig. 6a:: eine Darstellung der Kugelumlauflenkung aus Fig.6 gemäß Schnitt A-A,
- Fig. 7:: eine siebente nicht erfindungsgemäße Kugelumlauflenkung im Querschnitt,
- Fig. 7a:: eine Darstellung der Kugelumlauflenkung aus Fig.7 gemäß Schnitt A-A,
- Fig. 8:: eine achte nicht erfindungsgemäße Kugelumlauflenkung im Querschnitt,
- Fig. 9:: eine neunte nicht erfindungsgemäße Kugelumlauflenkung im Querschnitt,
- Fig. 10:: eine zehnte nicht erfindungsgemäße Kugelumlauflenkung im Querschnitt,
- Fig. 11:: eine elfte nicht erfindungsgemäße Kugelumlauflenkung im Querschnitt,
- Fig. 12:: eine zwölfte nicht erfindungsgemäße Kugelumlauflenkung im Querschnitt,
- Fig. 13:: eine dreizehnte nicht erfindungsgemäße Kugelumlauflenkung im Querschnitt,
- Fig. 13a:: eine Darstellung der Kugelumlauflenkung aus Fig.13 gemäß Schnitt A-A. und
- Fig.13b:: eine vierzehnte nicht erfindungsgemäße Kugelumlauflenkung im Querschnitt.

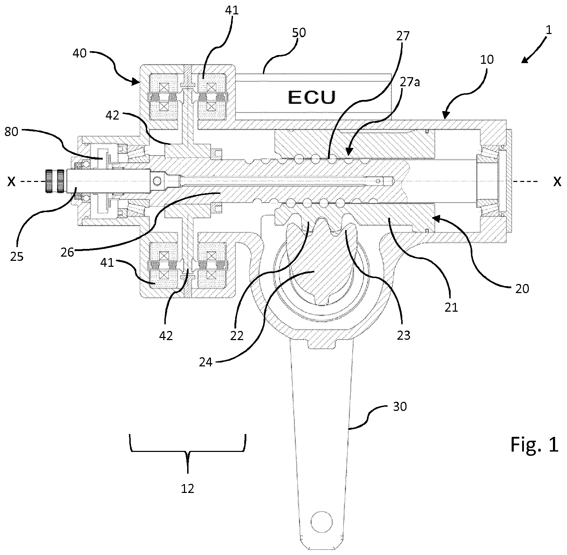

Figur 1 zeigt eine erste Ausführungsvariante der erfindungsgemäßen Kugelumlauflenkung 1 zur Übertragung einer Lenkbewegung von einem Lenkrad (nicht dargestellt) an einen Lenkstockhebel 30.

Die Kugelumlauflenkung 1 weist ein Gehäuse 10 mit einem innerhalb des Gehäuses 10 angeordneten Lenkkolben 20 auf, der entlang einer Längsachse X-X bewegbar ist. Der Lenkkolben 20 besteht aus mehreren einzelnen Komponenten und umfasst u.a. eine Lenkmutter 21, eine Lenkschnecke 26 und einen Kugelumlauf 27, wobei die Lenkmutter 21, die Lenkschnecke 26 und der Kugelumlauf 27 einen ersten Kugelgewindetrieb 27 und damit einen ersten Angriffspunkt ausbilden, mit dem eine rotatorische Bewegung in eine translatorische Bewegung umgewandelt wird.

Die Lenkmutter 21 ist innerhalb des Gehäuses 10 gleitend angeordnet, so dass die axiale Längsverschiebung des Lenkkolbens 20 ausführbar ist. Die Lenkmutter 21 weist außenseitig einen Verzahnungsbereich 22 auf, in den Zähne 23 einer Lenkwelle 24 eingreifen. Die Lenkwelle 24 ist dabei mit dem Lenkstockhebel 30 verbunden, so dass eine Längsverschiebung des Lenkkolbens 20 entlang der Längsachse X-X ein Verdrehen der Lenkwelle 24 und damit des Lenkstockhebels 30 bewirkt. Die Längsverschiebung des Lenkkolbens 20 wird durch den Fahrer über eine sich drehende Antriebswelle 25 bewirkt, die einen nicht dargestellten Lenkgeber, beispielsweise ein Lenkrad, mit der Lenkschnecke 26 verbindet.

Weiterhin umfasst die Kugelumlauflenkung 1 einen transversal zur Längsachse X-X angeordneten elektrischen Aktuator 40, der über ein Steuergerät 50 ansteuerbar ist. Der elektrische Aktuator 40 ist in der vorliegenden Ausführungsvariante als Elektromotor, insbesondere als Transversalmotor, ausgeführt und innerhalb des Gehäuses 10 angeordnet. Durch Bereitstellung eines Drehmoments unterstützt er dabei die Längsverschiebung des Lenkkolbens 20. Hierzu umfasst der elektrische Aktuator 40 einen um die Lenkschnecke 26 herum angeordneten Stator 41, der mit dem Gehäuse 10 fest verbunden ist, sowie einen mit der Lenkschnecke 26 fest verbundenen Rotor 42. Die Lenkschnecke 26 weist somit einen zweiten Angriffspunkt auf, über den ein Drehmoment auf die Lenkschnecke 26 übertragbar ist.

In Abhängigkeit eines Lenkbefehls des Fahrers, der über einen an der Antriebswelle 25 positionierten Sensor 80, beispielsweise zur Erfassung eines Drehwinkels oder eines Drehmoments, erfasst wird, und ggf. weiterer Fahrzeugparameter, wird der elektrische Aktuator 40 über das Steuergerät 50 angesteuert. Der elektrische Aktuator 40 stellt hierbei ein Drehmoment bereit, der die Drehbewegung der Lenkschnecke 26 unterstützt und somit zu einer Längsverschiebung der Lenkmutter 21 entlang der Längsachse X-X führt, die wiederrum ein Verdrehen der Lenkwelle 24 und damit des Lenkstockhebels 30 bewirkt.

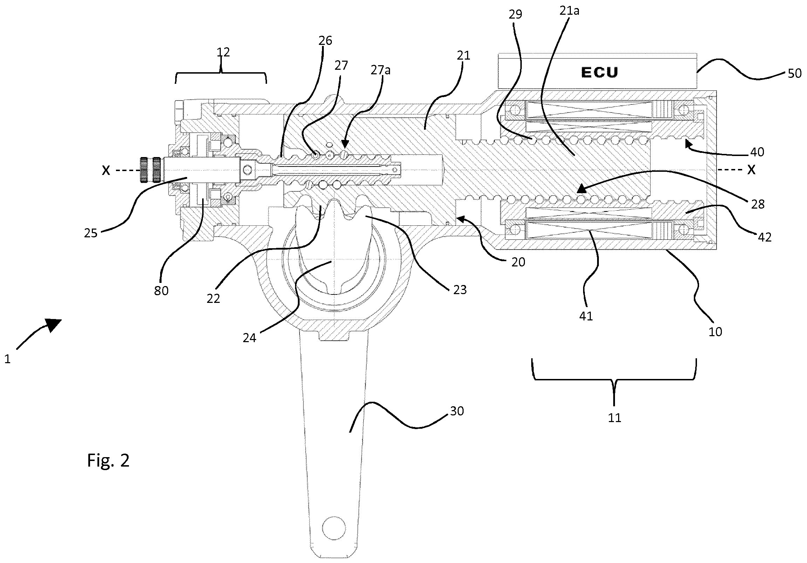

In Figur 2 ist eine zweite nicht erfindungsgemäße Kugelumlauflenkung 1 gezeigt. Im Unterschied zu der ersten Ausführungsvariante weist die Kugelumlauflenkung 1 einen hinteren Bereich 11 auf, der einem vorderen Bereich 12 gegenüberliegend angeordnet ist. In dem vorderen Bereich 12 ist beispielsweise die Antriebswelle 25 angeordnet, die sich durch das Gehäuse 10 erstreckt und mit dem Lenkgeber verbindbar ist.

Weiterhin weist der Lenkkolben 20 in der vorliegenden Ausführungsvariante eine kolbenartige Verlängerung 21a auf, die einen zweiten Kugelgewindetrieb 28 umfasst und sich in den hinteren Bereich 11 der Kugelumlauflenkung 1 erstreckt. Der Lenkkolben 20 weist somit einen ersten Kugelgewindetrieb 27 in dem vorderen Bereich 12 und einen zweiten Kugelgewindetrieb 28 im hinteren Bereich 11 der Kugelumlauflenkung 1 auf.

Ferner ist im hinteren Bereich 11 der Kugelumlauflenkung 1 der elektrische Aktuator 40 innerhalb des Gehäuses 10 angeordnet, der in der vorliegenden Ausführungsvariante als Elektromotor, insbesondere als Hohlwellenservomotor, ausgeführt ist. Durch Bereitstellung eines Drehmoments unterstützt er dabei die Längsverschiebung des Lenkkolbens 20. Der im hinteren Bereich 11 angeordneten Stator 41 ist um die kolbenartige Verlängerung 21a herum konzentrisch angeordnet und fest mit dem Gehäuse 10 verbunden. Zwischen der kolbenartigen Verlängerung 21a und dem Stator 41 ist der Rotor 42 angeordnet, der mit einem zweiten Kugelumlauf 29 und der kolbenartigen Verlängerung 21a den zweiten Kugelgewindetrieb 28 bildet. Durch diese spezifische Anordnung ist die kolbenartige Verlängerung 21a innerhalb des Gehäuses 10 ausreichend gelagert, so dass auf eine zusätzliche Lagerung der kolbenartigen Verlängerung 21a, beispielsweise mittels eines Kugellagers, verzichtet werden.

Weiterhin ist im hinteren Bereich 11 außerhalb des Gehäuses 10 das Steuergerät 50 angeordnet.

In Abhängigkeit eines Lenkbefehls des Fahrers, der über den Sensor 80 erfasst wird, und ggf. weiterer Fahrzeugparameter wird der elektrische Aktuator 40 über das Steuergerät 50 angesteuert. Der elektrische Aktuator 40 stellt hierbei ein Drehmoment bereit, der über den zweiten Kugelgewindetrieb 28 an einem zweiten Angriffspunkt auf den Lenkkolben 20 übertragen wird und die Längsverschiebung des Lenkkolbens 20 entlang der Längsachse X-X unterstützt.

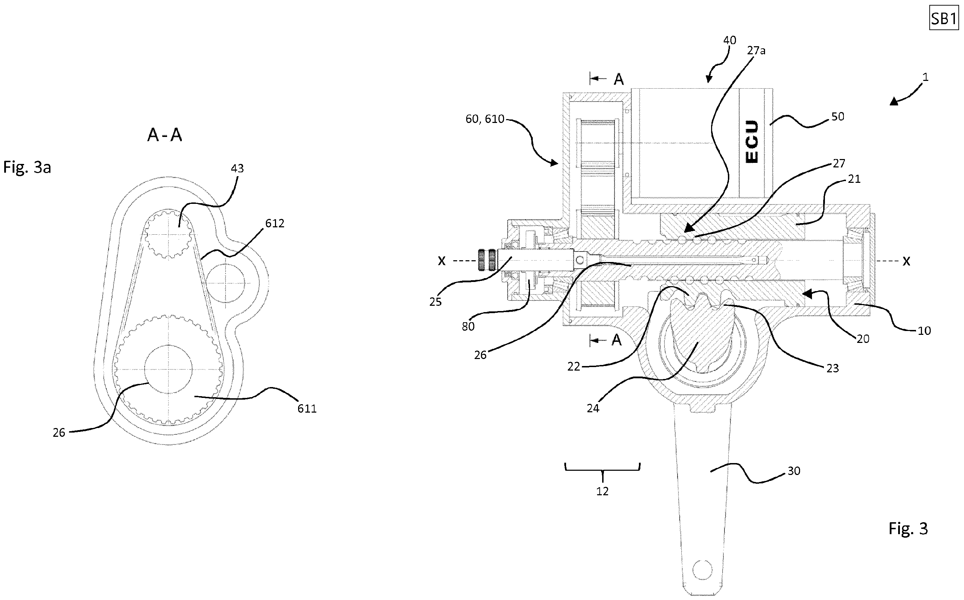

In Figur 3 und 3a ist eine dritte nicht erfindungsgemäße Kugelumlauflenkung 1 zur Übertragung einer Lenkbewegung von einem Lenkrad (nicht dargestellt) an einen Lenkstockhebel 30 gezeigt.

Die Kugelumlauflenkung 1 gleicht im Wesentlichen dem Aufbau der ersten Ausführungsvariante mit dem Unterschied, dass das Drehmoment des elektrischen Aktuators 40 über ein Kraftübertragungsmittel 60, insbesondere ein Zahnriemengetriebe 610 auf die Lenkschnecke 26 übertragen wird. Der elektrische Aktuator 40 ist in der vorliegenden Ausführungsvariante außerhalb des Gehäuses 10 angeordnet und als Elektromotor, insbesondere als Servomotor, ausgeführt. Das Zahnriemengetriebe 610 umfasst ein Getrieberad 611 sowie einen Zahnriemen 612 (Fig. 3a). Das Getrieberad 611 ist mit der Lenkschnecke 26 fest verbunden und weist somit einen zweiten Angriffspunkt auf, über den ein Drehmoment des elektrischen Aktuators 40 auf die Lenkschnecke 26 übertragbar ist. Der Zahnriemen 612 ist über das Getrieberad 611 und über eine Welle 43 des elektrischen Aktuators 40 gespannt.

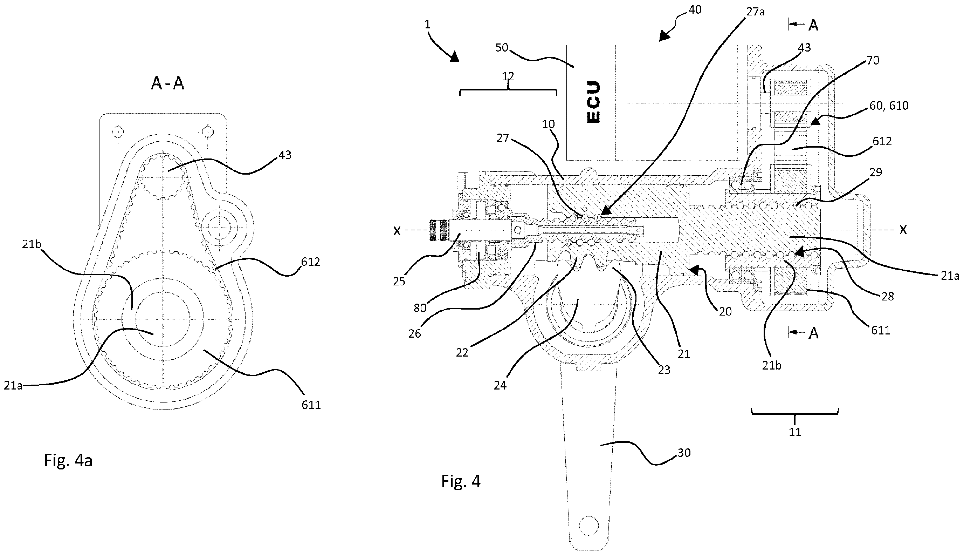

In Figur 4 und 4a ist eine vierte nicht erfindungsgemäße Kugelumlauflenkung 1 gezeigt, die im Wesentlichen dem Aufbau der zweiten Ausführungsvariante gleicht mit dem Unterschied, dass das Drehmoment des elektrischen Aktuators 40 über ein Kraftübertragungsmittel 60, insbesondere ein Zahnriemengetriebe 610 auf den Lenkkolben 20 übertragen wird. Der elektrische Aktuator 40 ist in der vorliegenden Ausführungsvariante außerhalb des Gehäuses 10 angeordnet und als Elektromotor, insbesondere als Servomotor, ausgeführt.

Das Zahnriemengetriebe 610 umfasst ein Getrieberad 611 sowie einen Zahnriemen 612 (Fig. 4a). Das Getrieberad 611 ist über eine Getriebemutter 21b mit der kolbenartige Verlängerung 21a verbunden und weist somit einen zweiten Angriffspunkt auf, über den ein Drehmoment des elektrischen Aktuators 40 auf den Lenkkolben 20 übertragbar ist. Der Zahnriemen 612 ist über das Getrieberad 611 und über die Welle 43 des elektrischen Aktuators 40 gespannt.

Die Getriebemutter 21b ist über eine Lagerung 70, beispielsweise ein Kugellager, mit dem Gehäuse 10 verbunden, so dass der Lenkkolben 20 an mindestens zwei voneinander entfernten Punkten innerhalb des Gehäuses 10 gelagert und in der radialen Bewegung limitiert ist.

Hier ist der elektrische Aktuator 40 sowie das Steuergerät 50 derart zueinander angeordnet, dass die gesamte Kugelumlauflenkung 1 eine kompakte Baueinheit darstellt.

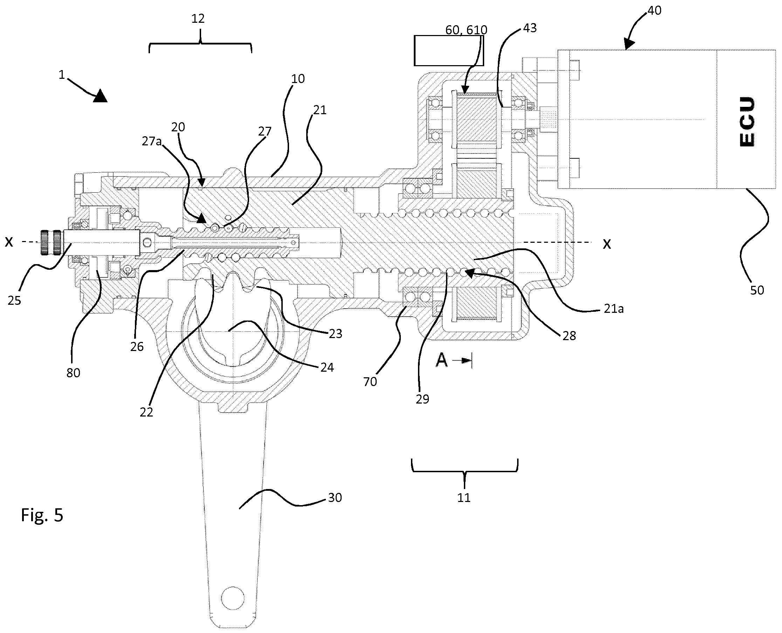

Alternativ können der elektrische Aktuator 40 sowie das Steuergerät 50 auch derart zueinander angeordnet werden, dass die gesamte Kugelumlauflenkung 1 eine schlanke Baueinheit darstellt (Fig.5).

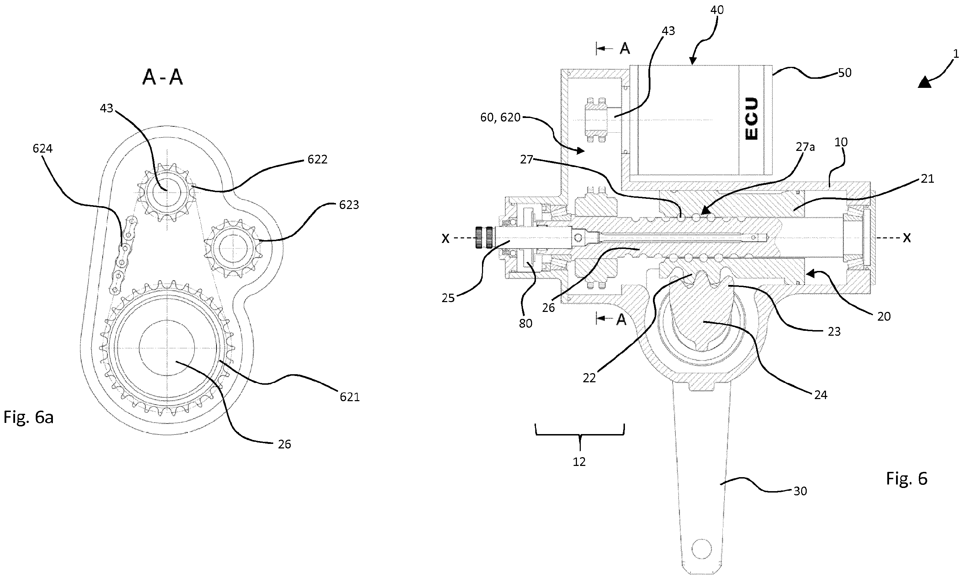

In Figur 6 und 6a ist eine sechste nicht erfindungsgemäße Kugelumlauflenkung 1 gezeigt, die im Wesentlichen dem Aufbau der dritten Kugelumlauflenkung gleicht mit dem Unterschied, dass als Kraftübertragungsmittel 60 ein Kettengetriebe 620 eingesetzt wird.

Das Kettengetriebe 620 umfasst mehrere Kettenräder 621, 622, 623 sowie eine Kette 624 (Fig. 4a). Das Kettenrad 621 ist mit der Lenkschnecke 26 fest verbunden und weist somit einen zweiten Angriffspunkt auf, über den ein Drehmoment des elektrischen Aktuators 40 auf die Lenkschnecke 26 übertragbar ist. Ein weiteres Kettenrad 622 sitzt auf der Welle 43 und ist mit dieser fest verbunden. Die Kette 624 läuft über die Kettenräder 621, 622 und wird über ein Kettenspannrad 623 gespannt.

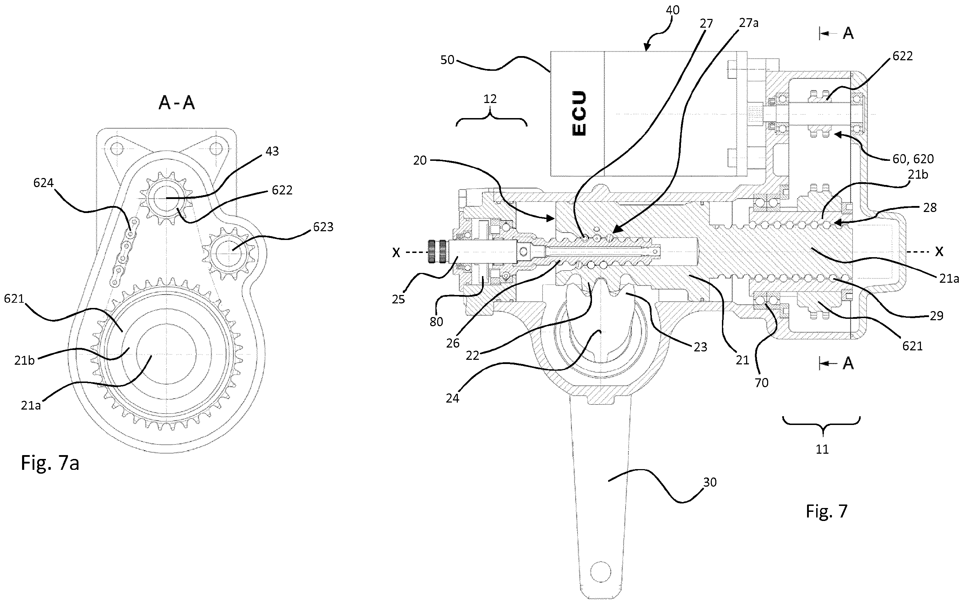

In Figur 7 und 7a ist eine siebente nicht erfindungsgemäße Kugelumlauflenkung 1 gezeigt, die im Wesentlichen dem Aufbau der vierten Kugelumlauflenkung gleicht mit dem Unterschied, dass das Kraftübertragungsmittel 60 ein Kettengetriebe 620 umfasst.

Das Kraftübertragungsmittel 60 ist hier, wie in der Kugelumlauflenkung gemäß Fig. 4, im hinteren Bereich 11 angeordnet. Das Kettenrad 621 ist über eine Getriebemutter 21b mit der kolbenartige Verlängerung 21a verbunden und weist somit einen zweiten Angriffspunkt auf, über den ein Drehmoment des elektrischen Aktuators 40 auf den Lenkkolben 20 übertragbar ist. Ein weiteres Kettenrad 622 sitzt auf der Welle 43 des elektrischen Aktuators 40 und ist mit dieser fest verbunden. Die Kette 624 läuft über das Kettenrad 621 und das Kettenrad 622 und wird über das Kettenspannrad 623 gespannt.

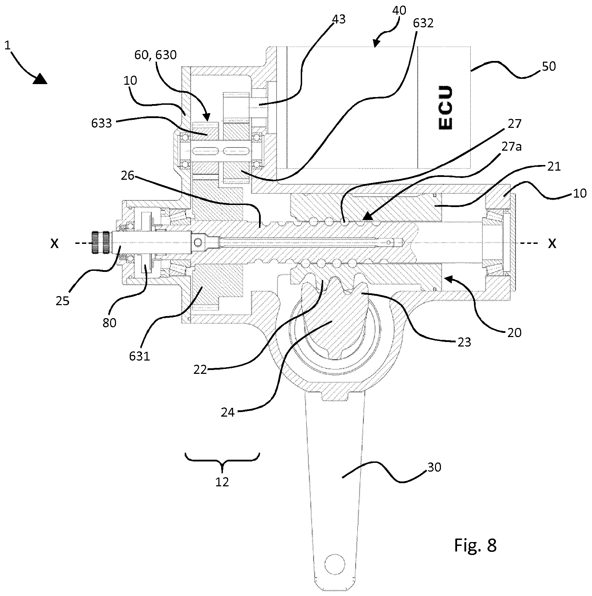

In Figur 8 ist eine achte nicht erfindungsgemäße Kugelumlauflenkung 1 gezeigt, die im Wesentlichen dem Aufbau der dritten Kugelumlauflenkung gleicht mit dem Unterschied, dass das Kraftübertragungsmittel 60 ein Zahnradgetriebe 630 umfasst.

Das Kraftübertragungsmittel 60 ist in der vorliegenden Kugelumlauflenkung, wie in der Ausführungsvariante gemäß Fig. 3, im vorderen Bereich 12 des Gehäuses 10 angeordnet und umfasst mehrere Zahnräder 631, 632, 633, die ineinandergreifen und somit ein Drehmoment des elektrischen Aktuators 40 auf die Lenkschnecke 26 übertragen.

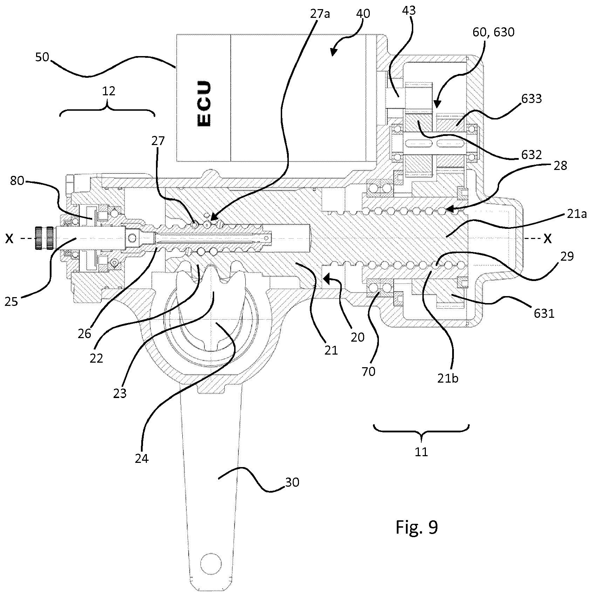

In Figur 9 ist eine neunte nicht erfindungsgemäße Kugelumlauflenkung 1 gezeigt, die im Wesentlichen dem Aufbau der vierten Kugelumlauflenkung gleicht mit dem Unterschied, dass das Kraftübertragungsmittel 60 ein Zahnradgetriebe 630 umfasst.

Das Kraftübertragungsmittel 60 ist in der vorliegenden Kugelumlauflenkung, wie in der Kugelumlauflenkung gemäß Fig. 4, im hinteren Bereich 11 des Gehäuses 10 angeordnet und umfasst mehrere Zahnräder 631, 632, 633, die ineinandergreifen und somit ein Drehmoment des elektrischen Aktuators 40 auf den Lenckolben 20 übertragen.

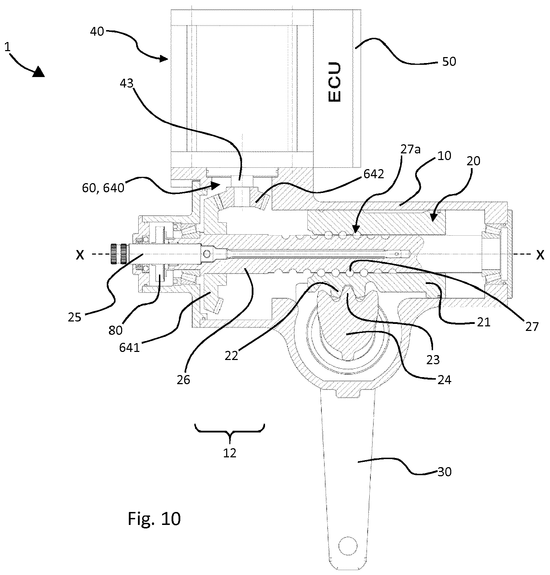

In Figur 10 ist eine zehnte nicht erfindungsgemäße Kugelumlauflenkung 1 gezeigt, die im Wesentlichen dem Aufbau der dritten Kugelumlauflenkung gleicht mit dem Unterschied, dass das Kraftübertragungsmittel 60 ein Kegelradgetriebe 640 umfasst.

Das Kraftübertragungsmittel 60 ist in der vorliegenden Kugelumlauflenkung, wie in der Kugelumlauflenkung Fig. 3, im vorderen Bereich 12 des Gehäuses 10 angeordnet und umfasst zwei Getrieberäder 641, 642, die ineinandergreifen und somit ein Drehmoment des elektrischen Aktuators 40 auf die Lenkschnecke 26 übertragen.

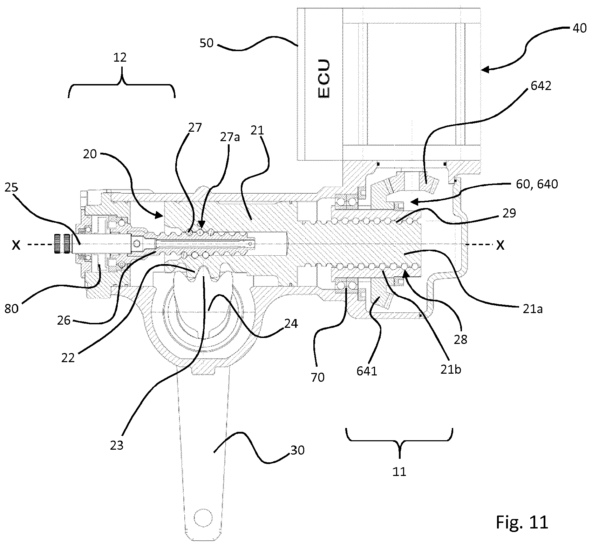

In Figur 11 ist eine elfte nicht erfindungsgemäße Kugelumlauflenkung 1 gezeigt, die im Wesentlichen dem Aufbau der vierten Kugelumlauflenkung gleicht mit dem Unterschied, dass das Kraftübertragungsmittel 60 ein Kegelradgetriebe 640 umfasst.

Das Kraftübertragungsmittel 60 ist in der vorliegenden Kugelumlauflenkung, wie in der Kugelumlauflenkung gemäß Fig. 4, im hinteren Bereich 11 des Gehäuses 10 angeordnet und umfasst zwei Getrieberäder 641, 642, die ineinandergreifen und somit ein Drehmoment des elektrischen Aktuators 40 auf den Lenkkolben 20 übertragen.

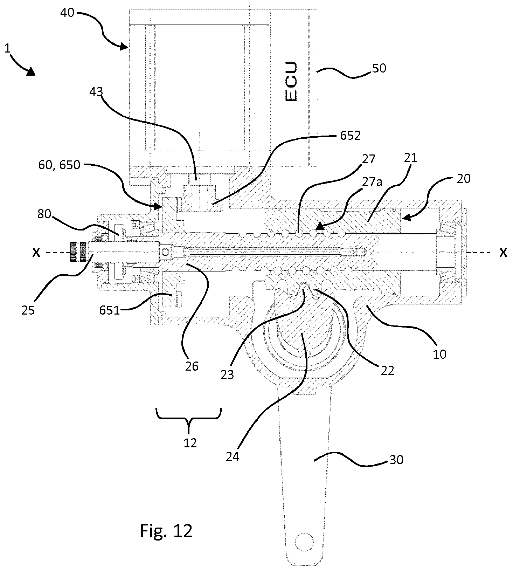

In Figur 12 ist eine zwölfte nicht erfindungsgemäße Kugelumlauflenkung 1 gezeigt, die im Wesentlichen dem Aufbau der dritten Kugelumlauflenkung gleicht mit dem Unterschied, dass das Kraftübertragungsmittel 60 ein Kronenradgetriebe 650 umfasst.

Das Kraftübertragungsmittel 60 ist in der vorliegenden Kugelumlauflenkung, wie in der Kugelumlauflenkung gemäß Fig. 3, im vorderen Bereich 12 des Gehäuses 10 angeordnet und umfasst zwei Getrieberäder 651, 652, die ineinandergreifen und somit ein Drehmoment des elektrischen Aktuators 40 auf die Lenkschnecke 26 übertragen.

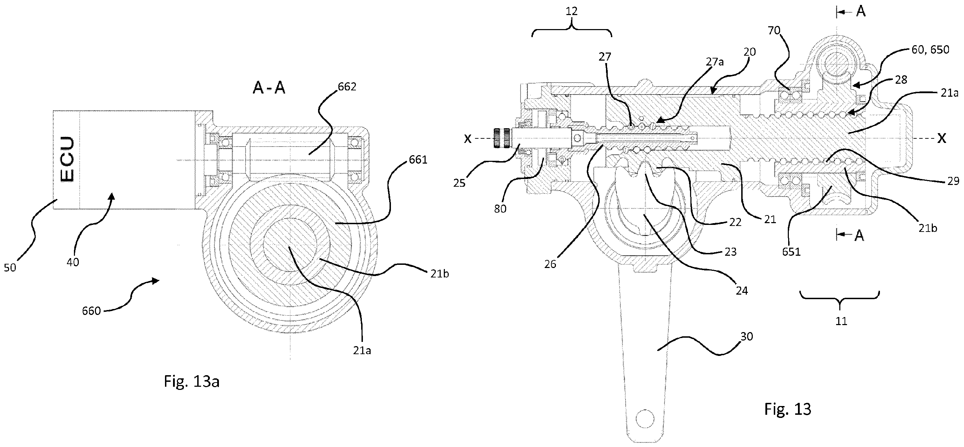

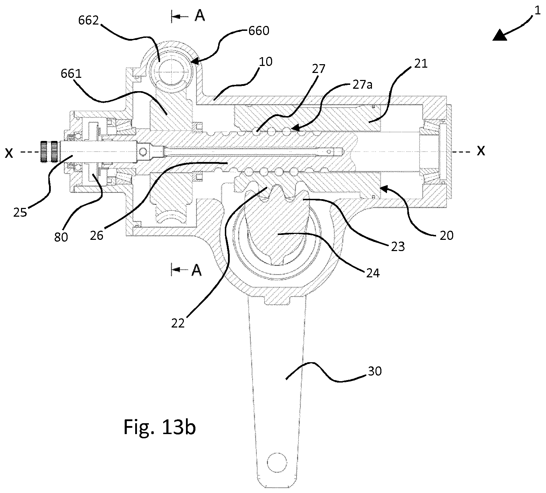

In Figur 13 und 13a ist eine dreizehnte nicht erfindungsgemäße Kugelumlauflenkung 1 gezeigt, die im Wesentlichen dem Aufbau der vierten Kugelumlauflenkung gleicht mit dem Unterschied, dass das Kraftübertragungsmittel 60 ein Schneckenradgetriebe 650 umfasst.

Das Kraftübertragungsmittel 60 ist in der vorliegenden Kugelumlauflenkung, wie in der Kugelumlauflenkung gemäß Fig. 4, im hinteren Bereich 11 des Gehäuses 10 angeordnet und umfasst zwei Getrieberäder 661, 662, die ineinandergreifen und somit ein Drehmoment des elektrischen Aktuators 40 auf den Lenkkolben 20 übertragen.

Schließlich ist in Figur 13 b eine vierzehnte nicht erfindungsgemäße Kugelumlauflenkung 1 gezeigt, die im Wesentlichen dem Aufbau der dritten Kugelumlauflenkung gleicht mit dem Unterschied, dass das Kraftübertragungsmittel 60 ein Schneckenradgetriebe 660 umfasst.

Das Kraftübertragungsmittel 60 ist in der vorliegenden Kugelumlauflenkung, wie in der Kugelumlauflenkung gemäß Fig. 3, im vorderen Bereich 12 des Gehäuses 10 angeordnet und umfasst zwei Getrieberäder 661, 662, die ineinandergreifen und somit ein Drehmoment des elektrischen Aktuators 40 auf die Lenkschnecke 26 übertragen.

### Bezugszeichen

- 1: Kugelumlauflenkung
- 10: Gehäuse
- 11: hinterer Bereich
- 12: vorderer Bereich
- 20: Lenkkolben
- 21: Lenkmutter
- 21a: kolbenartige Verlängerung
- 21b: Getriebemutter
- 22: Verzahnungsbereich
- 23: Zähne
- 24: Lenkwelle
- 25: Antriebswelle
- 26: Lenkschnecke
- 27: erster Kugelumlauf
- 27a: erster Kugelgewindetrieb
- 28: zweiter Kugelgewindetrieb
- 29: zweiter Kugelumlauf
- 30: Lenkstockhebel
- 40: elektrischer Aktuator
- 41: Stator
- 42: Rotor
- 43: Welle
- 50: Steuergerät
- 60: Kraftübertragungsmittel
- 70: Lagerung
- 80: Sensor
- 610: Zahnriemengetriebe
- 611: Getrieberad
- 612: Zahnriemen
- 620: Kettengetriebe
- 621: Kettenrad
- 622: Kettenrad
- 623: Kettenspanrad
- 624: Kette
- 630: Zahnradgetriebe
- 631: Zahnrad
- 632: Zahnrad
- 633: Zahnrad
- 640: Kegelradgetriebe
- 641: Getrieberad
- 642: Getrieberad
- 650: Kronenradgetriebe
- 651: Getrieberad
- 652: Getrieberad
- 660: Schneckenradgetriebe
- 661: Getrieberad
- 662: Getrieberad

## Patentansprüche

1. Kugelumlauflenkung (1) zur Übertragung einer Lenkbewegung an einen Lenkstockhebel (30) aufweisend:
- ein Gehäuse (10) mit einem innerhalb des Gehäuses (10) angeordneten Lenkkolben (20), wobei der Lenkkolben (20) einen Kugelgewindetrieb (27) umfasst und entlang seiner Längsachse verschiebbar ist, wobei der Lenkkolben (20) eine Lenkschnecke (26) umfasst, und
- einem elektrischen Aktuator (40) zur Unterstützung der Bewegung des Lenkkolbens (20),
- **dadurch gekennzeichnet, dass** der elektrische Aktuator (40) einen um die Lenkschnecke (26) herum angeordneten Stator (41) umfasst, der mit dem Gehäuse (10) fest verbunden ist, sowie einen mit der Lenkschnecke (26) fest verbundenen Rotor (42).

2. Kugelumlauflenkung (1) nach Anspruch 1, wobei die Kugelumlauflenkung keine hydraulische Einheit umfasst und die Unterstützung der Bewegung des Lenkkolbens (20) ausschließlich elektrisch erfolgt.

3. Fahrzeug aufweisend eine Kugelumlauflenkung (1) nach einem der Ansprüche 1 oder 2.

## Claims

1. Recirculating ball steering system (1) for transmitting a steering movement to a steering column (30) comprising:
- a housing (10) with a steering piston (20) arranged inside the housing (10), wherein the steering piston (20) comprises a ball screw drive (27) and is displaceable along its longitudinal axis, wherein the steering piston (20) comprises a steering worm (26), and
- an electric actuator (40) for supporting the movement of the steering piston (20),
- **characterised in that** the electric actuator (40) comprises a stator (41) arranged around the steering worm (26) and is securely connected to the housing (10), and a rotor (42) which is securely connected to the steering worm (26).

2. Recirculating ball steering system (1) according to claim 1,
wherein the recirculating ball steering system does not comprise a hydraulic unit and the support for the movement of the steering piston (20) is provided exclusively electrically.

3. Vehicle having a recirculating ball steering system (1) according to any one of claims 1 or 2.

## Revendications

1. Système de direction à recirculation de billes (1) pour transmettre un mouvement de direction à un levier de colonne de direction (30) présentant :
- un boîtier (10) avec un vérin de direction (20) disposé à l'intérieur du boîtier (10), dans lequel le vérin de direction (20) comprend une vis à billes (27) et peut être déplacé le long de son axe longitudinal, dans lequel le vérin de direction (20) comprend une vis sans fin de direction (26), et
- un actionneur électrique (40) pour assister le mouvement du vérin de direction (20),
- **caractérisé en ce que** l'actionneur électrique (40) comprend un stator (41) disposé autour de la vis sans fin de direction (26), qui est solidaire du boîtier (10), ainsi qu'un rotor (42) solidaire de la vis sans fin de direction (26).

2. Système de direction à recirculation de billes (1) selon la revendication 1,
dans lequel le système de direction à recirculation de billes ne comprend pas d'unité hydraulique et l'assistance au mouvement du vérin de direction (20) est exclusivement électrique.

3. Véhicule présentant un système de direction à recirculation de billes (1) selon l'une quelconque des revendications 1 ou 2.
